# EUROPÄISCHE PATENTANMELDUNG

(11) **EP 2 762 270 A1**
(43) Veröffentlichungstag der Anmeldung: **06.08.2014**
(21) Anmeldenummer: 14153630.0
(22) Anmeldetag: 03.02.2014
(51) Int. Cl.: B23Q 37/00

(54) **Produktionsmaschine**

(30) Priorität: 05.02.2013 DE 102013201817
(71) Anmelder: Otto Bihler Handels-Beteiligungs-GmbH, 87642 Halblech (DE)
(72) Erfinder: Maldoner Paul, 87669 Rieden (DE); Kuck Roland, 87629 Füssen (DE); Köpf Johann, 87642 Halblech (DE)
(74) Vertreter: Tiesmeyer, Johannes

(57) **Zusammenfassung**

Die Erfindung betrifft eine Produktionsmaschine, die mit verschiedenen Verarbeitungsstationen (20 bis 24) und/oder verschieden angeordneten Verarbeitungstationen (20 bis 24) ausrüstbar ist, um verschiedene Erzeugnisse herstellen zu können, umfassend mehrere Verarbeitungsstationen (20 bis 24), einen sich hauptsächlich in einer horizontalen Längsrichtung (L) und in vertikaler Richtung (V) erstreckenden und quer dazu Rahmenaußenseiten (4, 5) aufweisenden Maschinenrahmen (2), an dem ein im Wesentlichen horizontal ausgerichteter Produktionstisch (11) ausgebildet ist, auf dem eine Halteeinrichtungen für Werkstücke oder Erzeugnisse aufweisende Umlauf-Fördereinrichtung (13) zur Förderung von unfertigen Erzeugnissen zwischen Verarbeitungsstationen (20 bis 24) längs einer im Wesentlichen horizontalen, geschlossenen Förderbahn angeordnet ist, wobei der Produktionstisch (11) ein Befestigungsraster aus Befestigungspositionen zur Anbringung von Verarbeitungsstationen (20 bis 24) aufweist und zumindest einige der Verarbeitungsstationen (20 bis 24) daran angebracht sind, dadurch gekennzeichnet, dass die Fördereinrichtung (13) einen Bereich (28) innerhalb der geschlossenen Förderbahn aufweist, in dem die obere Fläche des Produktionstisches (11) in vertikaler Richtung zugänglich ist und in dem wenigstens eine Verarbeitungsstation (20-24) angeordnet ist, und dass der Maschinenrahmen (2) ein sich oberhalb des Produktionstisches (11) in Längsrichtung des Maschinenrahmens erstreckendes längliches Leitungsführungssegment (8) oberhalb eines seitlich zwischen den Rahmenaußenseiten (4, 5) offenen Durchtrittsbereiches des Maschinenrahmens (2) aufweist, wobei in dem Leitungsführungssegment (8) wenigstens eine an zumindest einer der Verarbeitungsstationen (20 bis 24) oder/und an der Fördereinrichtung angeschlossene Leitung verläuft.

## Beschreibung

Die Erfindung betrifft eine Produktionsmaschine, die mit verschiedenen Verarbeitungsstationen und/oder verschieden angeordneten Verarbeitungstationen ausrüstbar ist, um verschiedene Erzeugnisse herstellen zu können, umfassend mehrere Verarbeitungsstationen, einen sich hauptsächlich in einer horizontalen Längsrichtung und in vertikaler Richtung erstreckenden und quer dazu Rahmenaußenseiten aufweisenden Maschinenrahmen, an dem ein im Wesentlichen horizontal ausgerichteter Produktionstisch ausgebildet ist, auf dem eine Halteeinrichtungen für Werkstücke oder Erzeugnisse aufweisende Umlauf-Fördereinrichtung zur Förderung von unfertigen Erzeugnissen zwischen Verarbeitungsstationen längs einer im Wesentlichen horizontalen, geschlossenen Förderbahn angeordnet ist, wobei der Produktionstisch ein Befestigungsraster aus Befestigungspositionen zur Anbringung von Verarbeitungsstationen aufweist und zumindest einige der Verarbeitungsstationen daran angebracht sind,

Die Erfindung befasst sich somit mit einer Produktionsmaschine mit mehreren Verarbeitungsstationen zur Herstellung von Erzeugnissen mit einem sich hauptsächlich in eine Längsrichtung und in eine vertikale Richtung erstreckenden Maschinenrahmen, der entlang seiner Längsrichtung und seiner vertikalen Richtung angeordnete Rahmenaußenseiten aufweist und an dem ein im Wesentlichen horizontal ausgerichteter Produktionstisch ausgebildet ist, wobei auf dem Produktionstisch eine Fördereinrichtung angeordnet ist, die eine Förderung von unfertigen Erzeugnissen zwischen Verarbeitungsstationen in horizontaler Richtung ermöglicht, wobei die Produktionsmaschine zur Produktion verschiedener Erzeugnisse für die Ausrüstung mit verschiedenen Verarbeitungsstationen und/oder verschieden angeordneten Verarbeitungsstationen eingerichtet ist, und wobei an der Produktionsmaschine mehrere Befestigungspositionen für eine Verarbeitungsstation vorgesehen sind.

Um Erzeugnisse wie etwa Zündkerzen, elektromechanische Bauteile, Schlauchschellen, Beschläge, Gürtelschnallen, Schlossteile, Stecker oder Buchsen oder dergleichen herzustellen, werden Produktionsmaschinen verwendet, die sowohl Komponenten des Erzeugnisses zum Beispiel durch Urformen oder Umformen fertigen und zudem solche Komponenten ggf. mit weiteren, von außen zugeführten Komponenten zu einem Fertigerzeugnis zusammenfügen.

Bekannt sind außerdem Produktionsmaschinen, bei denen auf mehreren Stationen Stanz- und/oder Biegeoperationen durchgeführt werden, wie etwa die kommerziell erhältliche Maschine der Otto Bihler Maschinenfabrik, Halblech, Typ BM 306. Mit dieser Maschine kann aus einem langgestreckten Rohmaterial ein Erzeugnis geformt und vereinzelt werden. Weiter ist aus der Patentanmeldung WO 2012/042029 A1 eine Produktionsmaschine bekannt, mit der Fertigerzeugnisse hergestellt werden können.

Eine Produktionsmaschine der eingangs genannten Art und insbesondere eine Maschine gemäß der WO 2012/042029 A1 soll dahingehend verbessert werden, dass sie flexibler und für mehr Anwendungsfälle einsetzbar ist.

Erfindungsgemäß wird dies dadurch erreicht, dass die Fördereinrichtung einen Bereich innerhalb der geschlossenen Förderbahn aufweist, in dem die obere Fläche des Produktionstisches in vertikaler Richtung zugänglich ist und in dem wenigstens eine Verarbeitungsstation angeordnet ist, und dass der Maschinenrahmen ein sich oberhalb des Produktionstisches in Längsrichtung des Maschinenrahmens erstreckendes längliches Leitungsführungssegment oberhalb eines seitlich zwischen den Rahmenaußenseiten offenen Durchtrittsbereiches des Maschinenrahmens aufweist, wobei in dem Leitungsführungssegment wenigstens eine an zumindest einer der Verarbeitungsstationen oder/und an der Fördereinrichtung angeschlossene Leitung verläuft.

Die Fördereinrichtung ist als eine umlaufende Fördereinrichtung auf dem Produktionstisch ausgebildet, deren Förderbahn im Wesentlichen horizontal angeordnet ist und die innerhalb eines von der Förderbahn umgebenen Bereichs einen Freiraum bietet, in dem oben auf dem Produktionstisch Verarbeitungsstationen platzsparend untergebracht werden können. Deren Versorgungsleitungen können nach oben zu dem Leitungsführungssegment des Maschinenrahmens weggeführt werden, so dass sie vom eigentlichen Produktionsgeschehen der Verarbeitungsstationen ferngehalten und auf kürzesten Wegen zum Leitungsführungssegment hin übersichtlich verlegt sein können.

Die Fördereinrichtung bietet somit einen Förderkreisel, der von oben und von den Seiten innerhalb und außerhalb der Förderbahn gut zugänglich ist für automatische Bestückungs- oder/und Entnahmestationen, z. B. Pick & Place-Verarbeitungsstationen innerhalb oder/und außerhalb des Förderkreisels. Insbesondere die Möglichkeit der Anordnung von Verarbeitungsstationen im Bereich innerhalb der Förderbahn auf dem Produktionstisch und die Möglichkeit der nicht den Förderbetrieb der Fördereinrichtung und den Arbeitsbetrieb der Verarbeitungsstationen störenden Verlegung der Versorgungsleitungen solcher Verarbeitungsstationen nach oben zu dem Leitungsführungssegment des Maschinenrahmens ermöglicht erweiterte Anordnungskombinationen von Verarbeitungsstationen relativ zu der Fördereinrichtung und somit auch ein kompaktes, vergrößertes Bestückungsspektrum der Produktionsmaschine insgesamt, so dass diese flexibler und für mehr Anwendungsfälle einsetzbar ist, als dies bisher bei gattungsgemäßen Produktionsmaschinen der Fall war.

"Im Wesentlichen horizontal" bedeutet in Bezug auf die Förderbahn, dass auch vertikale oder horizontal-vertikale, also schräge Anteile umfasst sein können, die jedoch nicht dominieren. Durch eine solche Anordnung der Fördereinrichtung ist es möglich, sie entlang ihrer gesamten Förderbahn zu nutzen. Dadurch ergeben sich erheblich mehr Bearbeitungsstationen, sowie auch mehr Kombinationen von Bearbeitungsstationen, so dass bei im Wesentlichen gleicher Baugröße sich insgesamt eine flexiblere und effektivere Maschine ergibt, die auch für mehr Anwendungsfälle einsetzbar ist. Zur Ermöglichung von mehreren Befestigungspositionen von Verarbeitungsstationen und/oder der Fördereinrichtung sind vorzugsweise Löcher in dem Maschinenrahmen, besonders bevorzugt Gewindebohrungen vorgesehen. Vorzugsweise umfasst der Maschinenrahmen zumindest teilweise Halterungsmodule für Fertigungs- und/oder Montagekomponenten, die in der WO 2012/042 029 A1 offenbart sind. In Bezug auf die Merkmale und Verwendungsmöglichkeiten dieser Halterungsmodule soll der Inhalt der WO 2012/042 029 A1 als in dieser Patentanmeldung aufgenommen gelten. Insbesondere können solche Halterungsmodule zumindest Teile des Produktionstischs bilden.

Als Verarbeitungsstationen können insbesondere eine oder mehrere Montagestationen, Schweißstationen, Gewindeformungsstationen, Schraubstationen, Zuführstationen, Einzugsstationen, Pick- & Place-Stationen, Bearbeitungslaserstationen, Pressstationen, Kaltumformungsstationen, insbesondere Biegestationen, Stanzstationen, Stanz-Biegestationen, Isolierstationen, Abisolierstationen, Lötstationen, Klebestationen, Kunststoffspritzstationen, Beschriftungsstationen, Messstationen, Kamerastationen, und/oder Kontrollstationen zum Einsatz kommen, wobei die Verarbeitungsstationen vorzugsweise nummerisch gesteuerte Aggregate, sog. NC-Aggregate, umfassen.

Außerdem wirkt die Schwerkraft an allen Positionen an der Fördereinrichtung im Wesentlichen senkrecht zu der Förderbahn, sodass ein problemloser Austausch von Verarbeitungsstationen an allen Positionen an der Fördereinrichtung möglich ist. Ganz besonders gilt dies z.B. für Pick- & Place-Stationen, die Komponenten oder Erzeugnisse aus Halteeinrichtungen an der Fördereinrichtung entnehmen bzw. dort platzieren. Vorzugsweise laufen die Halteeinrichtungen von oben zugänglich um. Dadurch können Werkstücke oder Erzeugnisse auf einfache Weise in die Halteeinrichtungen eingelegt werden und werden durch die Schwerkraft dort gehalten, oder durch teilspezifisch ausgeformte Halteeinrichtungen. Die Entnahme und Bestückung sowie Produktionsschritte können entlang der gesamten Förderbahn von oben durchgeführt werden.

Im Inneren des Maschinenrahmens ist von einer Rahmenaußenseite bis zu der anderen Rahmenaußenseite ein offener Durchtrittsbereich angeordnet, wobei der Produktionstisch unterhalb des Durchtrittsbereichs angeordnet ist. Somit befindet sich zumindest ein Teil der Fördereinrichtung und vorzugsweise auch wenigstens eine Verarbeitungsstation wenigstens teilweise in dem Durchtrittsbereich.

Außerdem verläuft wenigstens eine Leitung zu einer oder mehreren Verarbeitungsstationen und/oder zu der Fördereinrichtung in einem oberhalb des Durchtrittsbereichs angeordneten Leitungsführungssegment des Maschinenrahmens. Dadurch wird ein Anschluss der Verarbeitungsstationen und/oder der Fördereinrichtung von oben ermöglicht, wodurch die Leitungen weiter von dem Produktionsgeschehen entfernt und somit weniger beschädigungsgefährdet sind. Außerdem ermöglicht der Verlauf durch das Leitungsführungssegment eine sichere Verlegung zu einem Ende der Produktionsmaschine in Längsrichtung, so dass dort oder dort in der Nähe beispielsweise eine Steuereinrichtung angeordnet sein kann.

In einer weiteren Ausführungsform der Produktionsmaschine ist an der Unterseite des Leitungsführungssegments des Maschinenrahmens verschiebbar eine Leitungsauslasseinrichtung angeordnet, durch die eine Leitung von dem Maschinenrahmen zu einer Verarbeitungsstation verläuft. Durch die Verschieblichkeit der Leitungsauslasseinrichtung kann die Kabeleintrittsstelle in das Leitungsführungssegment des Maschinenrahmens schnell und unkompliziert verlegt werden, wenn die Maschine für eine andere Produktion umgerüstet und eine Verarbeitungsstation und/oder die Fördereinrichtung an anderer Stelle angeordnet wird. Durch die Anordnung unterhalb des Leitungsführungssegments wird der Weg der Leitungen vom Austritt aus einer sicheren, geschlossenen Verlegung zu einer offenen Verlegung bis zu einer Verarbeitungsstation oder der Fördereinrichtung verkürzt. Die Verschiebbarkeit der Leitungsauslasseinrichtung wird vorzugsweise durch eine Längsnut in dem Leitungsführungssegment realisiert, besonders bevorzugt jedoch durch einen durchgehenden Längsschlitz in der Unterseite des Leitungsführungssegments. Durch einen solchen Längsschlitz können Leitungen an beliebiger Stelle aus dem Leitungsführungssegment in eine Leitungsauslasseinrichtung gelegt werden, was optimale Flexibilität bietet und ein Einfädeln der Leitungen bei einer Positionsänderung, wie etwa durch Löcher, vermeidet. Alternativ können Leitungen auch unmittelbar, d.h., ohne eine zusätzliche Leitungsauslasseinrichtung, durch den Längsschlitz aus dem Leitungsführungssegment heraus zu einer Verarbeitungsstation geführt sein. Die Leitungen können im Inneren des Leitungsführungssegments, sofern dieses einen inneren Hohlraum in Längsrichtung aufweist, oder oben auf dem Leitungsführungssegment, verlegt sein, bevorzugt bis zum Ende des Maschinenrahmens. Vorzugsweise ist an einer Leitungsauslasseinrichtung eine Buchse angeordnet, in die eine Leitung zu der Fördereinrichtung oder zu einer Verarbeitungsstation eingesteckt werden kann. Besonders bevorzugt sind an einer Leitungsauslasseinrichtung eine oder mehrere Buchsen angeordnet, vorzugsweise am Äußeren der Leitungsauslasseinrichtung und vorzugsweise in einem Anschlusskasten. Vorzugsweise weist die Leitungsauslasseinrichtung alternativ oder zusätzlich Leitungsauslasslöcher auf.

In einer Ausführungsform der Produktionsmaschine sind die Fördereinrichtung und/oder eine Verarbeitungsstation, besonders bevorzugt alle der Verarbeitungsstationen, vom Äußeren der Produktionsmaschine her zugänglich. Der Begriff "zugänglich" in Bezug bedeutet in dieser Patentanmeldung, dass eine Verarbeitungsstation und/oder die Fördereinrichtung vom Äußeren der Produktionsmaschine zugänglich sind, ohne dass dafür Teile der Produktionsmaschine demontiert und entfernt werden müssen. Besonders bevorzugt gilt dies für die Montage und Demontage der Fördereinrichtung und/ oder von einer, mehreren oder allen Verarbeitungsstationen. Durch diese Merkmale lässt sich die Produktionsmaschine besonders schnell und unkompliziert für die Produktion eines anderen Fertigerzeugnisses umrüsten.

In einer Ausführungsform der Produktionsmaschine ist entlang jeder der Rahmenaußenseiten der Produktionsmaschine jeweils wenigstens eine Verarbeitungssstation angeordnet. In dieser Ausführungsform wird der im Vergleich zum Stand der Technik zusätzliche Bauraum an der Fördereinrichtung genutzt. Besonders bevorzugt sind an Abschnitten der Fördereinrichtung mit Bandumlenkung Verarbeitungsstationen angeordnet. Dadurch wird die Fördereinrichtung im Vergleich zum Stand der Technik besser genutzt.

In einer weiteren Ausführungsform der Produktionsmaschine ist sie für den Aufbau unterschiedlicher Fördereinrichtungen auf dem Tisch eingerichtet. Dadurch ist die Produktionsmaschine noch flexibler und an noch mehr Fertigungsaufgaben anpassbar.

In noch einer weiteren Ausführungsform der Produktionsmaschine weist die Fördereinrichtung einen wenigstens leicht in Längsrichtung langgestreckten Förderbahnverlauf auf, wobei entlang des Förderbahnverlaufs ein Förderband angeordnet ist. Durch eine solche Ausgestaltung der Fördereinrichtung wird der Bauraum auf dem langgestreckten Montagerahmen optimal genutzt. Vorzugsweise beträgt die Länge der Fördereinrichtung wenigstens das Doppelte ihrer Breite. Vorzugsweise hat die Fördereinrichtung die Form von zwei mit Geraden miteinander verbundenen Halbkreisen. Vorzugsweise ist das Förderband als Metallband, besonders bevorzugt als Stahlband ausgeführt. Alternativ können Polyurethan- oder Gummiriemen oder dergleichen zum Einsatz kommen.

In einer Ausführungsform erstreckt sich das Förderband in Förderrichtung und in vertikaler Richtung. Diese Anordnung ermöglicht einen einstückigen Aufbau des Förderbandes vorzugsweise als Endlosband, das sich durch Biegung um einen Außenumfang der Fördereinrichtung legen lässt.

In einer weiteren Ausführungsform weist das Förderband Befestigungseinrichtungen für Halteeinrichtungen für Werkstücke, Komponenten oder Erzeugnisse auf. Die Halteeinrichtungen können dafür geeignet sein, sowohl Fertigerzeugnisse als auch halbfertige Erzeugnisse, denen im Vergleich zu Fertigerzeugnissen Komponenten fehlen oder deren Form noch nicht endgültig ausgebildet ist (Werkstücke), aufzunehmen. Die Befestigungseinrichtungen an dem Förderband können mit dem Förderband beispielsweise mittels Stiften oder Bolzen, die mit dem Förderband verschraubt, verschweißt oder dergleichen sind und von dem Förderband in Umfangsrichtung abstehen, verbunden sein. Die Befestigungseinrichtungen und die Halteeinrichtungen sind vorzugsweise so ausgestaltet, dass sie einfach aneinander befestigt und voneinander gelöst werden können. Besonders bevorzugt weisen die Befestigungseinrichtungen und die Halteeinrichtungen zueinander komplementäre Führungen auf, mittels denen eine Halteeinrichtung an eine Befestigungseinrichtung angesteckt werden kann. Besonders bevorzugt ist die Führung vertikal ausgerichtet. Dabei besitzt sie vorzugsweise einen Anschlag, der das Aufstecken einer Halteeinrichtung auf eine Befestigungseinrichtung in Schwerkraftrichtung begrenzt. Auf diese Weise kann einer Halteeinrichtung von einer Befestigungseinrichtung gegen die Schwerkraft einfach abgenommen bzw. die Halteeinrichtung mit Schwerkraftunterstützung an der Fördereinrichtung einfach befestigt werden.

In einer weiteren Ausführungsform der Produktionsmaschine ist an einer Rahmenaußenseite der Produktionsmaschine eine Montageplatte für wenigstens eine Verarbeitungsstation angeordnet, wobei die Montageplatte bevorzugt im Wesentlichen in der Ebene der Rahmenaußenseite oder parallel dazu angeordnet ist. Eine solche Montageplatte ermöglicht, eine Verarbeitungsstation abseits der Fördereinrichtung an der Positionsmaschine anzubringen. Besonders bevorzugt werden daran Verarbeitungsstationen befestigt, die der Herstellung von Komponenten dienen, besonders durch Biegen und Stanzen und insbesondere aus einem quasi endlosen langgestreckten Halbzeug. Vorzugsweise werden der Fördereinrichtung von solchen Verarbeitungsstationen produzierte Komponenten über eine separate Zuführeinrichtung, etwa eine Gleitbahn, zugeführt. Beispielsweise über eine Pick- & Place-Station können die Komponenten zur Weiterverarbeitung in die Förderbahn der Fördereinrichtung eingebracht werden. Vorzugsweise ist je eine Montageplatte an jeder der Rahmenaußenseiten der Produktionsmaschine angeordnet.

In noch einer weiteren Ausführungsform ist die Produktionsmaschine mit einer Vereinzelungseinrichtung verbunden, aus der der Produktionsmaschine Werkstücke zuführbar sind. Die Vereinzelungseinrichtung kann zum Beispiel ein Vibrationsförderer, ein Entnahmeautomat, der aus einer Verpackungseinheit einzelne Teile entnimmt, oder dergleichen sein. Vorzugsweise werden vereinzelte Teile über eine Gleitbahn der Fördereinrichtung zugeführt. Dort können die Teile beispielsweise über eine Pick- & Place-Station in die Förderbahn der Fördereinrichtung eingebracht werden.

Vorzugsweise überdeckt ein Abschnitt der Montageplatte einen Teil einer Seitenfläche eines Endpfeilers des Maschinenrahmens, wobei der Abschnitt zur Befestigung einer Einzugsstation eingerichtet ist. Durch eine solche Anordnung kommt die Einzugsstation neben dem Endpfeiler zu liegen und kann sogar über diesen hinaus von der Produktionsmaschine weg vorragen. Diese Position ist besonders günstig, weil so eine Abrollreinrichtung für langgestrecktes Rohmaterial neben der Produktionsmaschine aufgestellt werden können, wobei der Verlauf des Rohmaterials vorteilhaft kaum mit anderen Teile der Produktionsmaschine kollidieren kann. Außerdem ist die Abrollreinrichtung in etwas Abstand zu der Produktionsmaschine für den Nachschub von Rohmaterial gut zugänglich.

Im Folgenden wird beispielhaft eine Ausführungsform der Erfindung anhand der Figuren im Anhang beschrieben, in denen:
- Figur 1: einen Maschinenrahmen einer erfindungsgemäßen Produktionsmaschine in einer perspektivischen Darstellung zeigt,
- Figur 2: den Maschinenrahmen aus Figur 1 zusätzlich mit einer Fördereinrichtung und einer Montageplatte in einer perspektivischen Darstellung zeigt,
- Figur 3: den Maschinenrahmen aus Figur 2 zusätzlich mit mehreren Verarbeitungsstationen in einer perspektivischen Darstellung zeigt,
- Figur 4: den Maschinenrahmen aus Figur 3 zusätzlich mit einem Vibrationsförderer und mit einer weiteren Station zur Bereitstellung von Komponenten zur Bearbeitung oder Montage in einer perspektivischen Darstellung zeigt, und
- Figur 5: eine Montageplatte für eine erfindungsgemäße Produktionsmaschine in einer perspektivischen Darstellung zeigt.

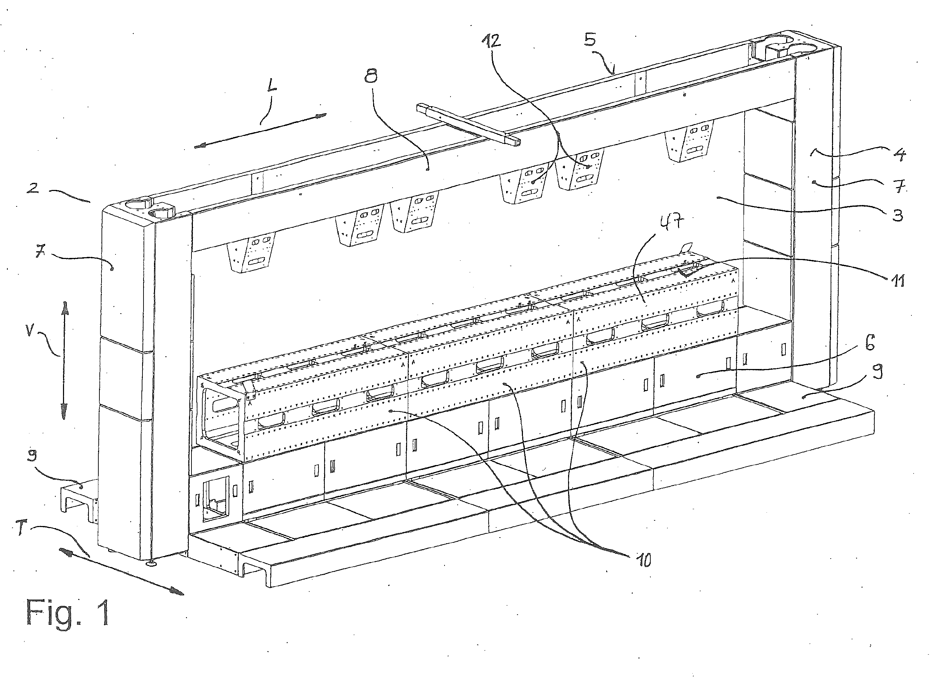

Figur 1 zeigt in einer perspektivischen Darstellung einen Maschinenrahmen 2 einer Produktionsmaschine nach der Erfindung. Der Maschinenrahmen 2 erstreckt sich im Wesentlichen in eine Längsrichtung L und in eine vertikale Richtung V. Im Inneren des Maschinenrahmens 2 befindet sich eine Durchtrittsöffnung 3, die sich von einer dem Betrachter zugewandten Rahmenaußenseite 4 zu einer dem Betrachter abgewandten, der Rahmenaußenseite 4 gegenüberliegen-den Rahmenaußenseite 5 erstreckt. Der Maschinenrahmen 2 weist im Wesentlichen eine rechteckige Form auf, wobei das Rechteck ein unteres, horizontal angeordnetes Rahmensegment 6, zwei vertikal angeordnete Endpfeiler 7 und ein oben horizontal angeordnetes Leitungsführungs-segment 8 umfasst. Das untere Rahmensegment 6, die beiden Endpfeiler 7 und das Leitungsführungssegment 8 fluchten vorzugsweise in der Ebene der Rahmenaußenseite 4 und/oder der Ebene der Rahmenaußenseite 5 miteinander. Die Rahmenaußenseite 4 und/oder die Rahmenaußenseite 5 sind vorzugsweise im Wesentlichen eben ausgebildet. Von dem unteren Rahmensegment 6 erstreckt sich in einer Tiefenrichtung T zu beiden Seiten des Maschinenrahmens 2 jeweils eine begehbare Arbeitsplattform 9, die vorzugsweise aus mehreren Segmenten zusammengesetzt ist. Vorzugsweise ist auch das untere Rahmensegment 6 aus mehreren Segmenten zusammengesetzt, die bevorzugt wenigstens teilweise die gleichen Abmessungen in Längsrichtung L wie die Segmente der Arbeitsplattform 9 haben. Eine Arbeitsplattform 9 erstreckt sich vorzugsweise über die gesamte Länge des unteren Rahmensegments 6, oder alternativ über die gesamte Länge des Maschinenrahmens 2. Die Arbeitsplattformen 9 sichern zusätzlich zu der Funktion, einen erhöhten Zutritt zu der Produktionsmaschine zu bieten, den Maschinenrahmen 2 gegen Umfallen in Tiefenrichtung T. Auf der Oberseite des unteren Rahmensegmentes 6 sind drei Halterungsmodule 10 angeordnet, deren Merkmale in der WO 2012/042 029 A1 offenbart und nicht als Teile des Maschinenrahmens zu betrachten sind. Insbesondere weisen die Halterungsmodule 10 ein Befestigungsraster aus einer Vielzahl von Befestigungspositionen in Form von Durchgangsbohrungen und/oder Gewindebohrungen auf, an denen die Fördereinrichtung und/oder Verarbeitungsstationen befestigt werden können. Die Halterungsmodule 10 sind in ihrem Inneren hohl und weisen in ihren Seiten nach oben und in Tiefenrichtung jeweils Löcher auf, durch die Leitungen ins Innere der Halterungsmodule 10 verlegt werden können. Die Oberseiten der Halterungsmodule 10 bilden den Produktionstisch 11.

An der Unterseite des Leitungsführungssegments 8 sind mehrere, bevorzugt sechs Leitungsauslasseinrichtungen 12 angeordnet. Diese Anzahl deckt bei einer typischen Produktionsmaschine den Bedarf an Versorgung der Verarbeitungsstationen und der Fördereinrichtung mit Leitungen optimal ab. Vorzugsweise sind die Leitungsauslasseinrichtungen 12 bis auf unterschiedliche, daran befestigte Buchsen, deren Zubehör und dergleichen und bis auf Produktionstoleranzen der Leitungsauslasseinrichtungen 12 identisch ausgeführt. Leitungen von der Fördereinrichtung und von den Verarbeitungsstationen können durch Löcher in den Leitungsauslasseinrichtungen 12 in deren Inneres verlegt werden, oder können an Buchsen an oder in den Leitungsauslasseinrichtungen 12 angeschlossen werden. Im Letzteren Fall verlaufen an die Buchsen angeschlossene Leitungen weiter im Inneren der Leitungsauslasseinrichtungen 12, zum Beispiel bis zu einem Steuerschaltschrank. Besonders bevorzugt verlaufen Leitungen von den Leitungsauslasseinrichtungen 12 im Inneren des Leitungsführungssegments 8 bis wenigstens in einen der Endpfeiler 7. Auf diese Weise sind die Leitungen zuverlässig geschützt.

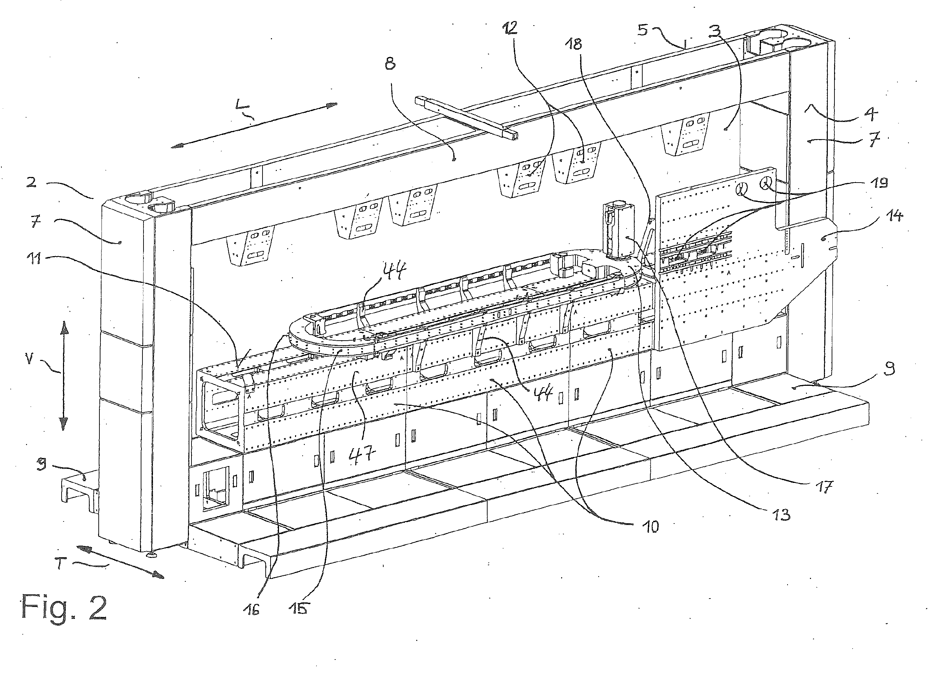

Figur 2 zeigt den Maschinenrahmen 2 mit einer daran angebrachten Fördereinrichtung 13 und einer Montageplatte 14.

Die Fördereinrichtung 13 ist auf dem Produktionstisch 11 angeordnet, wobei die Förderbahn im wesentlichen parallel zu dem Produktionstisch 11 verläuft. Die Fördereinrichtung 13 weist einen Antriebsmotor 17 auf, der sich im wesentlichen in vertikale Richtung V erstreckt. Der Antriebsmotor 17 ist vorzugsweise in Tiefenrichtung T in der Mitte der Fördereinrichtung 13 angeordnet. Besonders bevorzugt ist der Antriebsmotor 17 außerdem in Tiefenrichtung T in der Mitte des Produktionstischs 11 angeordnet. Die Fördereinrichtung 13 ist mit Vorzug im Wesentlichen sysmmetrisch bezüglich einer Mitte in Längsrichtung L des Produktionstischs 11 ausgeführt. Die Fördereinrichtung 13 ist an wenigstens einem oder vorzugsweise an allen der Halterungsmodule 10 befestigt. Dabei kann sie sowohl auf den Oberseiten der Halterungsmodule 10 als auch an einer oder mehreren Seiten in Tiefenrichtung T der Halterungsmodule 10 befestigt, bevorzugt verschraubt sein. Im Beispielsfall ist die Fördereinrichtung13 mittels Konsolen 44, die an vertikalen Anbauflächen 47 der Halterungsmodule 10 angeschraubt sind, oberhalb der Oberseiten der Halterungsmodule 10 angeordnet. Die Fördereinrichtung 13 weist ein umlaufendes Metallband 15 auf, das sich in Förderrichtung und in vertikale Richtung erstreckt. Die Förderbahn der Fördereinrichtung 13 verläuft in zwei geraden Abschnitten in Längsrichtung L, während zwei Verbindungsabschnitte die beiden geraden Abschnitte jeweils an deren Enden miteinander verbinden. Die Verbindungsabschnitte weisen vorzugsweise eine halbkreisförmige Förderbahn auf. Die geraden Abschnitte können über die Seitenflächen der Halterungsmodule 10 in Tiefenrichtung T hinausragen, wodurch sich eine besonders gute Zugänglichkeit ergibt. Das Metallband 15 weist Befestigungsmittel 16 auf, die von dem Metallband 15 in Richtung des Äußeren der Fördereinrichtung 13 abstehen. Vorzugsweise sind die Befestigungsmittel 16 in das Metallband eingesteckte Passhülsen mit Durchgangsbohrungen. Die Passhülsen stecken zudem in je einer Passbohrung einer der Befestigungsstelle gegenüberliegenden Führungsplatte. Diese Führungsplatte übernimmt die Führung des Bandes in seitlicher Richtung, dient der Vorschubzentrierung und ist zur Verschraubung von Halteeinrichtungen notwending. An den Befestigungsmitteln 16 können Halteeinrichtungen befestigt werden, in die Werkstücke aufgenommen werden können.

Die Montageplatte 14 ist an einer Seitenwand eines Halterungsmoduls 10, das am nächsten zu einem der Endpfeiler 7 angeordnet ist, befestigt. Dazu ist die Montageplatte 14 bevorzugt mit der Seitenwand in Tiefenrichtung T dieses Halterungsmoduls 10 verschraubt und weist zudem vorzugsweise eine Stützeinrichtung 18 auf, mittels der die Innenseite der Montageplatte 14 mit der Oberseite des Halterungsmoduls 10 verbunden ist. Ein Abschnitt der Montageplatte 14 überdeckt einen Teil einer Seitenwand in Tiefenrichtung T des Endpfeilers 7. Die Montageplatte 14 weist eine Vielzahl von Befestigungsmöglichkeiten für Verarbeitungsstationen auf, die vorzugsweise als Passbohrungen, Nuten und/oder Gewindebohrungen ausgeführt sind. Weiter weist die Montageplatte 14 mehrere Durchbrüche 19 auf, in die Teile von Verarbeitungsstationen hineinragen können.

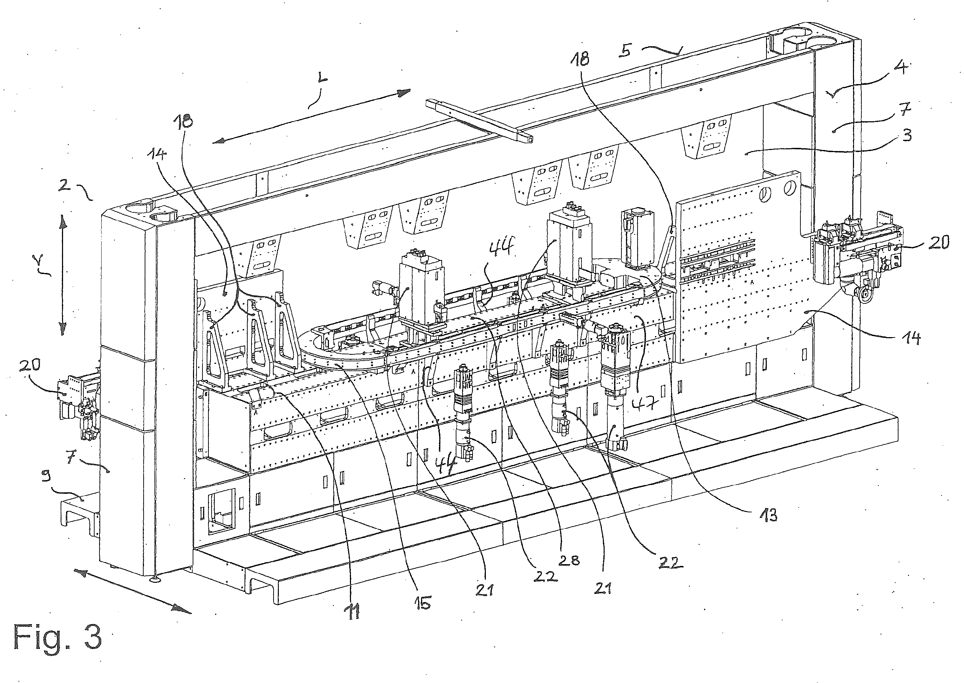

Figur 3 zeigt in einer perspektivischen Darstellung den in Figur 2 gezeigten Maschinenrahmen 2, der zusätzlich mit Verarbeitungsstationen und einer zweiten Montageplatte 14 ausgerüstet ist. Die zweite Montageplatte 14 hat vorzugsweise die gleiche Form wie die in Figur 2 gezeigte erste Montageplatte 14 und ist an dem Halterungsmodul 10 befestigt, das dem Endpfeiler 7 am nächsten ist, an dem nicht die erste Montageplatte 14 angeordnet ist. Die Montageplatten liegen sich vorzugsweise diagonal gegenüber. In einem weiteren Ausführungsbeispiel können sich zwei oder auch vier Montageplatten in Bezug auf eine Mitte des Montagerahmens 2 in Tiefenrichtung T und/ oder Längsrichtung L symmetrisch gegenüberliegen. Während die erste Montageplatte 14 in der Flucht der Rahmenaußenseite 4 liegt, ist die zweite Montageplatte 14 in der Flucht der Rahmenaußenseite 5 angeordnet. An den Abschnitten der Montageplatten 14, die jeweils einen Teil einer Außenseite eines Endpfeilers 7 überdecken, kann eine oder bevorzugt jeweils eine Einzugsstation 20 angeordnet sein. Die Einzugsstation 20 ist für das Einziehen von langgestrecktem Rohmaterial zur Produktion von Komponenten vorgesehen.

Im Bereich des Inneren der Förderbahn der Fördereinrichtung 13 ist die Fördereinrichtung 13 mit einem Durchtrittsbereich 28 ausgestaltet, durch den die Oberfläche des Produktionstischs 11 in vertikaler Richtung V zugänglich ist. Die Verarbeitungsstationen 21 sind in diesem Durchtrittsbereich 28 angeordnet und auf dem Produktionstisch 11 befestigt, vorzugsweise verschraubt. Dabei sind die Verarbeitungsstationen 21 so angeordnet und ausgestaltet, dass sie mit Werkzeugen Werkstücke in Halteeinrichtungen, die mit dem Förderband 15 verbunden sind, erreichen können. Vorzugsweise sind die Verarbeitungsstationen 21 als Pick- & Place-Stationen ausgeführt. Wahlweise sind auf den Rahmenaußenseiten 4 und 5 an dem Halterungsmodul 10 eine oder mehrere Verarbeitungsstationen 22 angeordnet. Auch diese Verarbeitungsstationen sind so angeordnet und ausgestaltet, dass sie mit Werkzeugen Werkstücke in Halteeinrichtungen, die mit dem Förderband 15 verbunden sind, erreichen können.

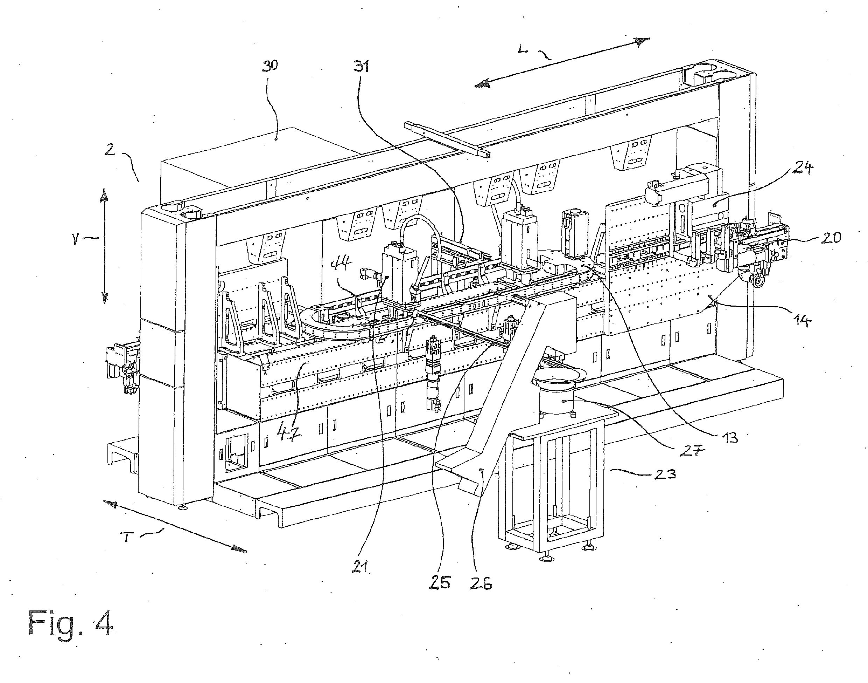

Figur 4 zeigt in perspektivischer Darstellung den in Figur 3 gezeigten Maschinenrahmen 2, mit dem zusätzlich eine weitere Verarbeitungsstation 24 an einer Montageplatte 14 und eine Vereinzelungseinrichtung 23 verbunden sind. Außerdem ist schematisch eine Kunststoffspritzgiesstation 30 dargestellt. Die Verarbeitungsstation 24 ist vorzugsweise als Stanz- und/ oder Biegestation 24 ausgebildet. Sie verarbeitet vorzugsweise von der Einzugsstation 20 eingezogenes langgestrecktes Rohmaterial zu Komponenten weiter. Von der Stanz- und/oder Biegestation 24 hergestellte Komponenten werden bevorzugt über eine Gleitschiene oder ein Band zu der Fördereinrichtung 13 transportiert, wo sie zur Weiterverarbeitung in Halteeinrichtungen aufgenommen werden. Vorzugsweise ist die Montageplatte 14 so ausgestaltet, dass daran mehrere Stanz- und/oder Biegestationen 24 angebracht werden können. Die Vereinzelungseinrichtung 23 ist bevorzugt mit einem Vibrationsförderer 27 ausgeführt. Der Vibrationsförderer 27 kann vorzugsweise mit einer Fördereinrichtung 26 mit neuen zu vereinzelnden Komponenten beladen werden. Der Vibrationsförderer 27 ist bevorzugt über eine Gleitschiene 25 mit der Fördereinrichtung 13 verbunden. An dem der Fördereinrichtung 13 zugewandten Ende der Gleitschiene 25 ist die Verarbeitungsstation 21 angeordnet, die bevorzugt als Pick- & Place-Station ausgebildet ist. Die schematisch dargestellte Station 30 ist über eine Transporteinrichtung 31 mit der Fördereinrichtung 13 verbunden und stellt Anbaukomponenten, z.B. Kunststoffspritzgusskomponenten für die Teilefertigung bereit. Die Transporteinrichtung 31 fördert von der Station 30 bereitgestellte Komponenten zu der Fördereinrichtung 13. An dem der Fördereinrichtung 13 zugewandten Ende der Transporteinrichtung 31 ist eine Verarbeitungsstation 21 angeordnet, die bevorzugt als Pick- & Place-Station ausgebildet ist. Die Verarbeitungsstationen 21 können auch eine Doppelfunktion als Pick- & Place-Station und als eine andere Verarbeitungsstation haben.

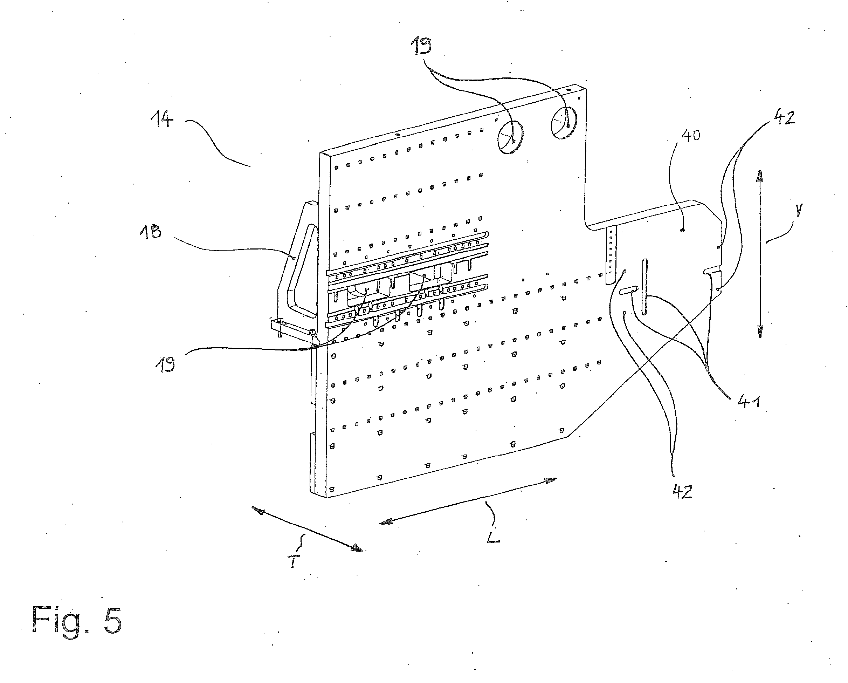

Figur 5 zeigt in einer perspektivischen Ansicht eine Montageplatte 14. Die Montageplatte 14 ist vorzugsweise mit einer oder mehreren Stützeinrichtungen 18 versehen. Sie weist mehrere Durchbrüche 19 auf, die einen runden oder einen rechteckigen oder einen geeignet anders geformten Querschnitt haben können. Ein in der Figur 5 nach rechts vorspringender Abschnitt 40 der Montageplatte 14 ist für die Aufnahme einer Einzugsstation 20 vorgesehen. In dem vorspringenden Abschnitt 40 sind dazu mehrere Nuten 41 sowie Gewindebohrungen 42 zur Befestigung der Einzugsstation 20 vorgesehen. In einer an einem Maschinenrahmen 2 montierten Position der Montageplatte 14, wie sie in den Figuren 2, 3 und 4 dargestellt ist, kommt der vorspringende Abschnitt 40 vor einem Endpfeiler 7 zu liegen, so dass eine an der Montageplatte 14 angebrachte Einzugsstation 20 ganz an einem Ende in Längsrichtung L des Maschinenrahmens 2 angeordnet ist. Diese Position ist besonders günstig, weil so Abrollreinrichtungen für langgestrecktes Rohmaterial in Verlängerung der Längsrichtung L der Produktionsmaschine aufgestellt werden können. Dadurch ist keine Umlenkung des Rohmaterials zu dem Einzug erforderlich. Der nicht zu dem vorspringender Abschnitt 40 gehörige Teil der Montageplatte 14 ist zur Befestigung von wenigstens einer Stanz- und/oder Biegestation 24 vorgesehen. Dazu trägt die Montageplatte 14 auf der dem Betrachter zugewandten Seite mehrere Reihen von Gewindebohrungen und/oder Passbohrungen. Durch die Vielzahl von Gewindebohrungen bzw. Passbohrungen ist es möglich, eine Stanz- und/oder Biegestation 24 an verschiedenen Positionen an der Montageplatte 14 zu befestigen. Die Durchbrüche 19 liegen vorzugsweise in dem nicht zu dem zu dem vorspringenden Abschnitt 40 gehörigen Teil der Montageplatte 14. Außerdem sind in der Montageplatte 14 vorzugsweise Bohrungen zur Befestigung an einem Halterungsmodul 10 vorgesehen.

## Patentansprüche

1. Produktionsmaschine, die mit verschiedenen Verarbeitungsstationen (20 bis 24) und/oder verschieden angeordneten Verarbeitungstationen (20 bis 24) ausrüstbar ist, um verschiedene Erzeugnisse herstellen zu können,
umfassend
mehrere Verarbeitungsstationen (20 bis 24),
einen sich hauptsächlich in einer horizontalen Längsrichtung (L) und in vertikaler Richtung (V) erstreckenden und quer dazu Rahmenaußenseiten (4, 5) aufweisenden Maschinenrahmen (2), an dem ein im Wesentlichen horizontal ausgerichteter Produktionstisch (11) ausgebildet ist, auf dem eine Halteeinrichtungen für Werkstücke oder Erzeugnisse aufweisende Umlauf-Fördereinrichtung (13) zur Förderung von unfertigen Erzeugnissen zwischen Verarbeitungsstationen (20 bis 24) längs einer im Wesentlichen horizontalen, geschlossenen Förderbahn angeordnet ist, wobei der Produktionstisch (11) ein Befestigungsraster aus Befestigungspositionen zur Anbringung von Verarbeitungsstationen (20 bis 24) aufweist und zumindest einige der Verarbeitungsstationen (20 bis 24) daran angebracht sind,
**dadurch gekennzeichnet,**
**dass** die Fördereinrichtung (13) einen Bereich (28) innerhalb der geschlossenen Förderbahn aufweist, in dem die obere Fläche des Produktionstisches (11) in vertikaler Richtung zugänglich ist und in dem wenigstens eine Verarbeitungsstation (20-24) angeordnet ist,
und **dass** der Maschinenrahmen (2) ein sich oberhalb des Produktionstisches (11) in Längsrichtung des Maschinenrahmens erstreckendes längliches Leitungsführungssegment (8) oberhalb eines seitlich zwischen den Rahmenaußenseiten (4, 5) offenen Durchtrittsbereiches des Maschinenrahmens (2) aufweist, wobei in dem Leitungsführungssegment (8) wenigstens eine an zumindest einer der Verarbeitungsstationen (20 bis 24) oder/und an der Fördereinrichtung angeschlossene Leitung verläuft.

2. Produktionsmaschine nach Anspruch 1, **dadurch gekennzeichnet, dass** sie eine den Produktionstisch (11) bildende Halterungsmodulanordnung (10, 10, 10) aus miteinander verbundenen gleichen prismatischen, insbesondere quaderförmigen Halterungsmodulen (10) aufweist, die an mehreren Seiten (11, 47), einschließlich ihrer die obere Fläche des Produktionstisches (11) bildenden Seite ein Befestigungsraster zur Befestigung von Verarbeitungsstationen (20 bis 24) aufweist.

3. Produktionsmaschine nach Anspruch 1 oder 2, **dadurch gekennzeichnet, dass** die Fördereinrichtung (13) und/oder wenigstens eine Verarbeitungsstation (20 bis 24), insbesondere alle der Verarbeitungsstationen (20 bis 24), vom Äußeren der Produktionsmaschine her zugänglich sind.

4. Produktionsmaschine nach einem der vorhergehenden Ansprüche, **dadurch gekennzeichnet, dass** entlang jeder der Rahmenaußenseiten (4, 5) der Produktionsmaschine jeweils wenigstens eine Verarbeitungsstation (20 bis 24) angeordnet ist.

5. Produktionsmaschine nach einem der vorangehenden Ansprüche, **dadurch gekennzeichnet, dass** die Produktionsmaschine für den Aufbau unterschiedlicher Fördereinrichtungen (13) auf dem Produktionstisch (11) eingerichtet ist.

6. Produktionsmaschine nach einem der vorangehenden Ansprüche, **dadurch gekennzeichnet, dass** die Fördereinrichtung (13) einen in Längsrichtung (L) des Maschinenrahmens (2) langgestreckten Förderbahnverlauf aufweist, wobei entlang des Förderbahnverlaufs ein Förderband (15) angeordnet ist.

7. Produktionsmaschine nach einem der vorhergehenden Ansprüche,
**dadurch gekennzeichnet, dass** an der Unterseite des Leitungsführungssegments (8) des Maschinenrahmens (2) verschiebbar eine Leitungsauslasseinrichtung (12) angeordnet ist, durch die eine Leitung von dem Maschinenrahmen (2) zu einer Verarbeitungsstation (20 bis 24) verläuft.

8. Produktionsmaschine nach einem der vorangehenden Ansprüche,
**dadurch gekennzeichnet, dass** an einer Rahmenaußenseite (4, 5) der Produktionsmaschine eine Montageplatte (14) für wenigstens eine Verarbeitungsstation (20 bis 24) angeordnet ist, wobei die Montageplatte (14) im Wesentlichen in der Ebene der Rahmenaußenseite (4, 5) oder parallel dazu angeordnet ist.

9. Produktionsmaschine nach Anspruch 8, **dadurch gekennzeichnet, dass** eine an der Montageplatte (14) befestigte Verarbeitungsstation (20 bis 24) als Werkstückherstellstation (24) ausgebildet und damit hergestellte Werkstücke zu der Fördereinrichtung (13) mittels einer Zuführeinrichtung transportierbar sind.

10. Produktionsmaschine nach einem der vorangehenden Ansprüche, **dadurch gekennzeichnet, dass** die Produktionsmaschine mit einer Vereinzelungseinrichtung (23) verbunden ist, aus der der Produktionsmaschine Werkstücke zuführbar sind.
